(19) Europäisches Patentamt
European Patent Office
Office européen des brevets

(11) **EP 2 411 708 B1**

(12) **EUROPÄISCHE PATENTSCHRIFT**

(45) Veröffentlichungstag und Bekanntmachung des Hinweises auf die Patenterteilung:
**21.12.2016 Patentblatt 2016/51**

(21) Anmeldenummer: **09759893.2**

(22) Anmeldetag: **23.11.2009**

(51) Int Cl.:
*F16J 10/04* (2006.01)      *F16J 9/26* (2006.01)
*C22C 38/34* (2006.01)      *C22C 38/44* (2006.01)
*C22C 38/46* (2006.01)

(86) Internationale Anmeldenummer:
**PCT/EP2009/008334**

(87) Internationale Veröffentlichungsnummer:
**WO 2010/108529 (30.09.2010 Gazette 2010/39)**

(54) **NITRIERFÄHIGE STAHLWERKSTOFFZUSAMMENSETZUNG ZUR HERSTELLUNG VON KOLBENRINGEN UND ZYLINDERLAUFBUCHSEN**

NITRIDING GRADE STEEL MATERIAL COMPOSITION FOR MANUFACTURING PISTON RINGS AND CYLINDER LINERS

COMPOSITION DE MATÉRIAU À BASE D'ACIER APTE À ÊTRE NITRURÉE POUR FABRIQUER DES SEGMENTS DE PISTON ET DES CHEMISES DE CYLINDRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.03.2009 DE 102009015008**

(43) Veröffentlichungstag der Anmeldung:
**01.02.2012 Patentblatt 2012/05**

(73) Patentinhaber: **Federal-Mogul Burscheid GmbH
51399 Burscheid (DE)**

(72) Erfinder: **PELSOECZY, Laszio
51515 Kürten (DE)**

(74) Vertreter: **Becker Kurig Straus
Patentanwälte
Bavariastrasse 7
80336 München (DE)**

(56) Entgegenhaltungen:
**EP-A- 0 295 111        WO-A-03/098079
DE-A1- 19 953 311    DE-A1-102006 038 670
JP-A- 1 205 063        JP-A- 3 122 257
JP-A- 5 132 738        US-A- 3 990 892
US-A- 5 081 760        US-A1- 2002 066 502**

## Beschreibung

Die vorliegende Erfindung betrifft Kolbenringe, die eine gute Nitrierfähigkeit aufweisen. Weiterhin betrifft die vorliegende Erfindung einen nitrierten Kolbenring, welcher aus dem erfindungsgemäßen Kolbenring mit guter Nitrierfähigkeit herstellbar ist. Außerdem betrifft die vorliegende Erfindung ein Verfahren zur Herstellung der erfindungsgemäßen Kolbenringe mit guter Nitrierfähigkeit sowie ein Verfahren zur Herstellung der erfindungsgemäßen nitrierten Kolbenringe.

## Stand der Technik

Kolbenringe dichten in einem Verbrennungskraftmotor den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Zur Herstellung hoch beanspruchter Teile von Verbrennungskraftmotoren, wie beispielsweise Kolbenringen, werden meist Gusseisenwerkstoffe bzw. Gusseisenlegierungen verwendet. Kolbenringe, insbesondere Kompressionsringe, unterliegen in hochbeanspruchten Motoren einer zunehmenden Belastung, unter anderem Kompressionsspitzendruck, Verbrennungstemperatur, EGR und Schmierfilmreduzierung, die deren Funktionseigenschaften, wie Verschleiß, Brandspurbeständigkeit, Microwelding und Korrosionsbeständigkeit, maßgeblich beeinflussen.

Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen. Ebenso kommt es zu starkem Verschleiß und Korrosion an Lauffläche und Flanke.

Höhere Zünddrücke, reduzierte Emissionen sowie die Kraftstoff-Direkteinspritzung bedeuten steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen fordern immer mehr Motorenhersteller Kolbenringe aus hochwertigem Stahl (vergütet und hochlegiert, wie beispielsweise Werkstoff 1.4112). Hierbei bezeichnet man Eisenwerkstoffe mit weniger als 2,08 Gew.-% Kohlenstoff als Stahl. Liegt der Kohlenstoffgehalt höher, so redet man von Gusseisen. Stahlwerkstoffe besitzen gegenüber Gusseisen bessere Festigkeits- und Zähigkeitseigenschaften, da keine Störung durch freien Graphit im Grundgefüge vorhanden ist.

Meist werden hochchromlegierte martensitische Stähle für die Herstellung von Stahlkolbenringen eingesetzt. Der Einsatz dieser Stähle weist aber den Nachteil auf, dass die Herstellungskosten im Vergleich zu Gusseisenbauteilen signifikant höher sind.

Stahlkolbenringe werden aus Profildraht hergestellt. Der Profildraht wird rund gewickelt, aufgeschnitten und über einen "Unrund"-Dorn gezogen. Auf diesem Dorn erhält der Kolbenring durch einen Glühprozess seine erwünschte unrunde Form, wodurch die geforderten Tangentialkräfte eingestellt werden. Ein weiterer Nachteil der Herstellung von Kolbenringen aus Stahl ist, dass ab einem gewissen Durchmesser die Ringherstellung (Wickeln) aus Stahldraht nicht mehr möglich ist. Kolbenringe aus Gusseisen werden dagegen bereits unrund gegossen, so dass sie von Anfang an eine ideale Form aufweisen.

Gusseisen besitzt eine wesentlich niedrigere Schmelztemperatur als Stahl. Der Unterschied kann je nach chemischer Zusammensetzung bis zu 350°C betragen. Gusseisen ist daher einfacher zu schmelzen und zu gießen, da eine niedrigere Schmelztemperatur eine niedrigere Gießtemperatur und damit eine kleinere abkühlungsbedingte Schwindung bedeutet, wodurch der gegossene Werkstoff weniger Lunker bzw. Warm- und Kaltrisse aufweist. Eine niedrigere Gießtemperatur führt weiterhin zu einer geringeren Belastung des Formstoff (Erosion, Gasporositäten, Sandeinschlüsse) und des Ofens sowie zu geringeren Schmelzkosten.

Die Schmelztemperatur des Eisenwerkstoffs hängt nicht nur von seinem Kohlenstoffgehalt, sondern auch von dem "Sättigungsgrad" ab. Es gilt die vereinfachte Formel:

$$S_c = C/(4{,}26 - 1/3(Si + P)).$$

Je näher der Sättigungsgrad an 1 liegt, desto niedriger ist die Schmelztemperatur. Bei Gusseisen wird zumeist ein Sättigungsgrad von 1,0 angestrebt, wobei das Gusseisen eine Schmelztemperatur von 1150°C aufweist. Der Sättigungsgrad von Stahl beträgt, abhängig von der chemischen Zusammensetzung, ungefähr 0,18. Eutektischer Stahl weist eine Schmelztemperatur von 1500°C auf.

Der Sättigungsgrad kann durch den Si- oder P-Gehalt deutlich beeinflusst werden. Zum Beispiel wirkt sich ein um 3 Gew.-% höherer Gehalt an Silizium ähnlich wie ein 1 Gew.% höherer C-Gehalt aus. Es ist somit möglich, einen Stahlwerkstoff mit einem C-Gehalt von 1 Gew.-% und 9,78 Gew.-% Silizium herzustellen, der die gleiche Schmelztemperatur wie Gusseisen mit einem Sättigungsgrad von 1,0 (C: 3,26 Gew.-%, Si: 3,0 Gew.-%) aufweist.

Durch eine drastische Erhöhung des Si-Gehalts kann der Sättigungsgrad des Stahlwerkstoffs erhöht werden und die Schmelztemperatur auf das Niveau von Gusseisen abgesenkt werden. Somit ist es möglich, Stahl mit Hilfe derjenigen Technik herzustellen, die auch für die Herstellung von Gusseisen, beispielsweise GOE 44, verwendet wird.

Kolbenringe aus hochsiliziumhaltigem Stahlgusswerkstoff sind im Stand der Technik bekannt. Allerdings beeinflusst das in höheren Mengen vorhandene Silizium die Härtbarkeit des Werkstoffs negativ, da dessen Austenitumwandlungstemperatur "Ac3" erhöht wird.

Die EP 0 295 111 betrifft einen zur Herstellung von Kolbenringen geeigneten Stahlwerkstoff, der durch eine bestimmte Kombination von Elementen gekennzeichnet ist, bei der jedoch der Gehalt an Si und Ni niedriger und der Gehalt an Cr höher als bei der vorliegenden Erfindung ist.

Die US 3,990,892 beschreibt Legierungsstähle unter Bezug auf Ventilsitze und offenbart keinen Bezug zu Kolbenringen. Ferner ist die beanspruchte Kombination der Elemente in deren entsprechenden Konzentrationen nicht aus der US 3,990,892 ableitbar.

Ein im Stand der Technik übliches Verfahren, um dennoch eine hohe Härte der Kolberingoberfläche zu gewährleisten, bestände in der Nitrierung des Werkstoffs. Allerdings hat sich gezeigt, dass hochsiliziumhaltige Stahlgusswerkstoffe des Standes der Technik eine schlechte Nitrierbarkeit aufweisen.

## Beschreibung der Erfindung

Folglich ist es Aufgabe der vorliegenden Erfindung, Kolbenringe bereitzustellen, welche als Grundkörper eine hochsiliziumhaltige Stahlwerkstoffzusammensetzung aufweisen und welche eine gute Nitrierbarkeit aufweisen, sowie nitrierte Kolbenringe bereitzustellen. Die nitrierte Stahlwerkstoffzusammensetzung der nitrierten Kolbenringe soll durch die Herstellung im Schwerkraftguss die Eigenschaften von vergütetem Gusseisen mit Kugelgraphit in mindestens einem der folgenden Punkte übertreffen:

- Mechanische Eigenschaften wie E-Modul, Biegefestigkeit
- Widerstandsfähigkeit gegenüber Brüchen
- Gestaltfestigkeit
- Flankenverschleiß
- Laufflächenverschleiß

Diese Aufgabe wird erfindungsgemäß durch Kolbringe gelöst, die als Grundkörper eine Stahlwerkstoffzusammensetzung aufweisen, welche die folgenden Elemente im angegebenen Anteil enthält:

| | | |
|---|---|---|
| C: | 0,5 - 1,2 | Gew.-% |
| Cr: | 4,0 - 20,0 | Gew.-% |
| Fe: | 45,30 - 91,25 | Gew.-% |
| Mn: | 0,1 - 3,0 | Gew.-% |
| Mo: | 0,1 - 3,0 | Gew.-% |
| Ni: | 2,0 - 12,0 | Gew.-% |
| Si: | 2,0 - 10,0 | Gew.-% |
| V: | 0,05 - 2,0 | Gew.-% |
| B: | max. 0,5 | Gew.-% |
| Cu: | max. 2,0 | Gew.-% |
| Nb: | max. 0,05 | Gew.-% |
| P: | max. 0,1 | Gew.-% |
| Pb: | max. 0,05 | Gew.-% |
| S: | max. 0,05 | Gew.-% |
| Sn: | max. 0,05 | Gew.-% |
| Ti: | max. 0,2 | Gew.-% |
| W: | max. 0,5 | Gew.-% |

wobei die Stahlwerkstoffzusammensetzung nur Elemente, ausgewählt aus der Gruppe, bestehend aus B, C, Cr, Cu, Fe, Mn, Mo, Nb, Ni, P, Pb, S, Si, Sn, Ti, V und W enthält, wobei die Summe dieser Elemente 100 Gew.-% ergibt.

Es wird davon ausgegangen, dass die gute Nitrierbarkeit der erfindungsgemäßen Kolbenringe durch den Gehalt von 4,0 - 20,0 Gew.-% Chrom gewährleistet wird. Chrom bildet bei einem Nitrierprozess sehr harte Nitride. Während der Zusatz von Chrom zu einer Stahlwerkstoffzusammensetzung allerdings normalerweise die Austenitumwandlungstemperatur des Werkstoffs weiter erhöhen würde und damit seine Härtbarkeit weiter verschlechtern würde, wurde erfindungsgemäß gefunden, dass die Zugabe von 2,0 - 12,0 Gew.-% Nickel dieser Erhöhung der Austenitumwandlungstemperatur entgegenwirkt. Auf diese Weise wird erfindungsgemäß verhindert, dass eine Erhöhung der Austenitumwandlungstemperatur die durch die bessere Nitrierbarkeit der Stahlwerkstoff-zusammensetzung erreichbare höhere Härtbarkeit der Werkstoffoberfläche durch eine gleichzeitige schlechtere Härtbarkeit des Grundkörpers wieder zunichte gemacht wird.

Durch Nitrieren der erfindungsgemäßen Kolbenringe mit guter Nitrierbarkeit werden erfindungsgemäß nitrierte Kolbenringe erhalten.

Die erfindungsgemäßen nitrierten Kolbenringe haben eine reduzierte Neigung, unter starker Hitze ihre Form zu verändern, und sorgt somit für ein dauerhaft hohes Leistungsvermögen und vermindert darüber hinaus den Ölverbrauch.

Die erfindungsgemäßen nitrierten Stahlkolbenringe weisen weiterhin den Vorteil auf, dass ihre Herstellung mit den zur Herstellung von Gusseisen-Werkstücken notwendigen Maschinen und Technologien ermöglicht wird. Zudem entsprechen die Herstellungskosten denen von Gusseisen-Kolbenringen, was dem Hersteller einen Kostenvorteil und eine bessere Wertschöpfung bietet. Ebenso können Werkstoffparameter frei vom Zulieferer eingestellt werden.

Erfindungsgemäße Kolbenringe werden in einem Verfahren hergestellt, welches die folgenden Schritte umfasst:

a. Herstellen einer Schmelze der Ausgangsmaterialien, und
b. Abgießen der Schmelze in eine vorgefertigte Form.

Als Ausgangsmaterialien können beispielsweise Stahlschrott, Kreislaufmaterial und Legierungsstoffe verwendet werden. Der Schmelzprozess erfolgt in einem Ofen, vorzugsweise einem Kupolofen. Anschließend wird ein Rohling unter Erstarrung der Schmelze hergestellt. Der Kolbenring kann dabei mit im Stand der Technik bekannte Methoden gegossen werden, wie beispielsweise Schleuderguss, Strangguss, Stempel-Pressverfahren, Croning oder bevorzugt Grünsandformen.

Nach Erkalten des Kolbenrings wird die Form ausgeleert und der erhaltene Rohling geputzt.

Gegebenenfalls kann der Kolbenring anschließend vergütet werden. Diese erfolgt durch die folgenden Schritte:

c. Austenitisieren des Kolbenrings oberhalb seiner Ac3-Temperatur,
d. Abschrecken des Kolbenrings in einem geeigneten Abschreckmedium, und
e. Anlassen des Kolbenrings bei einer Temperatur im Bereich von 400 bis 700°C in einem Schutzgasofen.

Als Abschreckmedium wird bevorzugt Öl verwendet.

Zur Herstellung eines erfindungsgemäßen nitrierten Kolbenrings erfolgt im Anschluss an die zuvor erwähnten Verfahrensschritte ein Nitrieren des erhaltenen Kolbenrings. Dies kann beispielsweise durch Gasnitrieren, Plasmanitrieren oder Drucknitrieren erfolgen.

Das folgende Beispiel erläutert die Erfindung, ohne sie zu beschränken.

**Beispiel**

Es wurde ein Kolbenring aus einer erfindungsgemäßen gut nitrierbaren Stahlwerkstoffzusammensetzung der folgenden Zusammensetzung hergestellt:

| B: | 0,001 | Gew.-% | Pb: | 0,16 | Gew.-% |
| C: | 0,7 | Gew.-% | S: | 0,009 | Gew.-% |
| Cr: | 18,0 | Gew.-% | Si: | 3,0 | Gew.-% |

(fortgesetzt)

| Cu: | 0,05 | Gew.-% | Sn: | 0,001 | Gew.-% |
| Mn: | 0,45 | Gew.-% | Ti: | 0,003 | Gew.-% |
| Mo: | 1,05 | Gew.-% | V: | 0,11 | Gew.-% |
| Nb: | 0,002 | Gew.-% | W: | 0,003 | Gew.-% |
| Ni: | 3,15 | Gew.-% | Fe: | Rest | |

Dies erfolgte durch Herstellen einer Schmelze der Ausgangsmaterialien (Stahlschrott, Kreislaufmaterial und Legierungsstoffe), und Abgießen der Schmelze in eine vorgefertigten Grünsandform. Anschließend wurde die Form ausgeleert und der erhaltene Kolbenring geputzt. Der Kolbenring wurde daraufhin vergütet. Diese erfolgt durch Austenitisieren oberhalb der Ac3-Temperartur der Stahlwerkstoffzusammensetzung, Abschrecken in Öl, und Anlassen bei einer Temperatur im Bereich von 400 bis 700°C in einem Schutzgasofen.

Schließlich erfolgte eine Nitrierung der Oberfläche des erhaltenen Kolbenrings. In den nitrierten Bereichen wurde eine Härte von mehr als 1000 HV erreicht, welche eine hohe Beständigkeit gegen Flankenverschleiß und Laufflächenverschleiß garantiert. Die Härte wurde hierbei nach DIN 6773 bestimmt.

**Patentansprüche**

1. Kolbenring, der als Grundkörper eine Stahlwerkstoffzusammensetzung umfasst, welche eine gute Nitrierbarkeit aufweist, **dadurch gekennzeichnet, dass** die Stahlwerkstoffzusammensetzung die folgenden Elemente im angegebenen Anteil, bezogen auf 100 Gew.-%, der enthält:

| C: | 0,5 - 1,2 | Gew.-% |
| Cr: | 4,0 - 20,0 | Gew.-% |
| Fe: | 45,30 - 91,25 | Gew.-% |
| Mn: | 0,1 - 3,0 | Gew.-% |
| Mo: | 0,1 - 3,0 | Gew.-% |
| Ni: | 2,0 - 12,0 | Gew.-% |
| Si: | 2,0 - 10,0 | Gew.-% |
| V: | 0,05 - 2,0 | Gew.-% |
| B: | max. 0,5 | Gew.-% |
| Cu: | max. 2,0 | Gew.-% |
| Nb: | max. 0,05 | Gew.-% |
| P: | max. 0,1 | Gew.-% |
| Pb: | max. 0,05 | Gew.-% |
| S: | max. 0,05 | Gew.-% |
| Sn: | max. 0,05 | Gew.-% |
| Ti: | max. 0,2 | Gew.-% |
| W: | max. 0,5 | Gew.-% |

wobei die Stahlwerkstoffzusammensetzung nur Elemente, ausgewählt aus der Gruppe, bestehend aus B, C, Cr, Cu, Fe, Mn, Mo, Nb, Ni, P, Pb, S, Si, Sn, Ti, V und W enthält, wobei die Summe dieser Elemente 100 Gew.-% beträgt.

2. Nitrierter Kolbenring, **dadurch gekennzeichnet, dass** er durch Nitrieren eines Kolbenrings nach Anspruch 1 erhältlich ist.

3. Verfahren zur Herstellung eines Kolbenrings gemäß Anspruch 1, umfassend die folgenden Schritte:

    a. Herstellen einer Schmelze der Ausgangsmaterialien, und
    b. Abgießen der Schmelze in eine vorgefertigte Form.

4. Verfahren gemäß Anspruch 3, weiterhin umfassend die folgenden Schritte:

    c. Austenitisieren des Kolbenrings oberhalb seiner Ac3-Temperatur,
    d. Abschrecken des Kolbenrings in einem geeigneten Abschreckmedium, und
    e. Anlassen des Kolbenrings bei einer Temperatur im Bereich von 400 bis 700°C in einem Schutzgasofen.

5. Verfahren zur Herstellung eines Kolbenrings gemäß Anspruch 2, umfassend die folgenden Schritte:

    a. Durchführen eines Verfahrens nach einem der Ansprüche 3 oder 4, und
    b. Nitrieren des erhaltenen Kolbenrings.

**Claims**

1. A piston ring which comprises as its main body a steel material composition which has good nitridability, **characterized in that** the steel material composition contains the following elements in the proportions given, expressed with respect to 100 weight % of the steel material composition:

| | | |
|---|---|---|
| C: | 0.5 - 1.2 | weight % |
| Cr: | 4.0 - 20.0 | weight % |
| Fe: | 45.30 - 91.25 | weight % |
| Mn: | 0.1 - 3.0 | weight % |
| Mo: | 0.1 - 3.0 | weight % |
| Ni: | 2.0 - 12.0 | weight % |
| Si: | 2.0 - 10.0 | weight % |
| V: | 0.05 - 2.0 | weight % |
| B: | max 0.5 | weight % |
| Cu: | max 2.0 | weight % |
| Nb: | max 0.05 | weight % |
| P: | max 0.1 | weight % |

(continued)

| | | |
|---|---|---|
| Pb: | max 0.05 | weight % |
| S: | max 0.05 | weight % |
| Sn: | max 0.05 | weight % |
| Ti: | max 0.2 | weight % |
| W: | max 0.5 | weight % |

wherein the steel material composition contains only elements selected from the group consisting of B, C, Cr, Cu, Fe, Mn, Mo, Nb, Ni, P, Pb, S, Si, Sn, Ti, V and W, the sum of said elements being 100 weight %.

2. A nitrided piston ring, **characterized in that** it can be obtained by nitriding a piston ring according to claim 1.

3. A process for the manufacture of a piston ring according to claim 1, comprising the following steps:

    a. producing a molten mass from the starting materials; and
    b. casting the molten mass into a prepared mould.

4. The process according to claim 3, further comprising the following steps:

    c. austenitization of the piston ring above its Ac3 temperature;
    d. quenching the piston ring in a suitable quenching medium; and
    e. tempering the piston ring at a temperature in the range 400°C to 700°C in a controlled atmosphere furnace.

5. The process for manufacturing a piston ring according to claim 2, comprising the following steps:

    a. carrying out a process according to claim 3 or claim 4; and
    b. nitriding the piston ring obtained.

**Revendications**

1. Segment de piston comprenant, en tant que corps de base, une composition d'acier possédant une bonne capacité à être nitrurée, **caractérisé en ce que** ladite composition d'acier contient les éléments suivants dans les proportions indiquées ci-après lesquelles se rapportent à 100 % en poids :

| | | |
|---|---|---|
| C : | 0,5 - 1,2 | % en poids |
| Cr : | 4, 0 - 20,0 | % en poids |
| Fe : | 45,30 - 91,25 | % en poids |
| Mn : | 0,1 - 3,0 | % en poids |

(suite)

| Mo : | 0,1 - 3,0 | % en poids |
|------|-----------|------------|
| Ni : | 2,0 - 12,0 | % en poids |
| Si : | 2, 0 - 10,0 | % en poids |
| V : | 0,05 - 2,0 | % en poids |
| B : | max. 0,5 | % en poids |
| Cu : | max. 2,0 | % en poids |
| Nb : | max. 0,05 | % en poids |
| P : | max. 0,1 | % en poids |
| Pb : | max. 0,05 | % en poids |
| S : | max. 0,05 | % en poids |
| Sn : | max. 0,05 | % en poids |
| Ti : | max. 0,2 | % en poids |
| W : | max. 0,5 | % en poids |

ladite composition d'acier contenant exclusivement des éléments choisis dans le groupe constitué de B, C, Cr, Cu, Fe, Mn, Mo, Nb, Ni, P, Pb, S, Si, Sn, Ti, V et W, la somme desdits éléments étant égale à 100 % en poids.

2. Segment de piston nitruré, **caractérisé en ce qu'**il peut être obtenu par nitruration d'un segment de piston selon la revendication 1.

3. Procédé de fabrication d'un segment de piston selon la revendication 1, comprenant les étapes suivantes :

 a. faire fondre les matériaux de départ, et
 b. couler les matériaux fondus dans un moule préfabriqué.

4. Procédé selon la revendication 3, comprenant en outre les étapes suivantes :

 c. austénitiser le segment de piston au-dessus sa température Ac3,
 d. soumettre le segment de piston à une trempe dans un milieu de refroidissement approprié, et
 e. soumettre le segment de piston à un revenu réalisé dans un domaine compris entre 400 et 700 °C au sein d'un four mis sous atmosphère protectrice.

5. Procédé de fabrication d'un segment de piston selon la revendication 2, comprenant les étapes suivantes :

 a. mettre en oeuvre un procédé selon l'une des revendications 3 ou 4, et
 b. nitrurer le segment de piston ainsi obtenu.

**IN DER BESCHREIBUNG AUFGEFÜHRTE DOKUMENTE**

**In der Beschreibung aufgeführte Patentdokumente**

- EP 0295111 A
- US 3990892 A